# EUROPEAN PATENT SPECIFICATION

(11) **EP 3 457 667 B1**
(45) Date of publication and mention of the grant of the patent: **01.12.2021**
(21) Application number: 17795597.8
(22) Date of filing: 12.05.2017
(51) Int. Cl.: H04L 29/08

(54) **METHOD, CONTROL DEVICE AND AGENT DEVICE FOR OPERATION OF EQUIPMENT**
VERFAHREN, STEUERUNGSVORRICHTUNG UND AGENT FÜR DEN BETRIEB EINER ANLAGE
PROCÉDÉ, DISPOSITIF DE COMMANDE ET DISPOSITIF D'AGENT POUR L'EXPLOITATION D'ÉQUIPEMENT

(30) Priority: 13.05.2016 CN 201610320166
(43) Date of publication of application: 20.03.2019
(73) Proprietor: BOE Technology Group Co., Ltd., Beijing 100015 (CN)
(72) Inventor: ZHAO, Junjie, Beijing 100176 (CN)
(74) Representative: Klunker IP Patentanwälte PartG mbB
(86) International application number: PCT/CN2017/084035
(87) International publication number: WO 2017/193979

(56) References cited:
- WO-A1-2016/003134
- WO-A1-2016/041343
- CN-A- 104 796 922
- CN-A- 105 050 028
- CN-A- 105 491 507
- US-A1- 2009 292 995
- US-A1- 2016 007 137

## Description

### TECHNICAL FIELD

The present invention relates to the field of communication, and more particularly, to a method as in claim 1, a system as in claim 9, a method as in claim 10 and a proxy device as in claim 15.

### BACKGROUND

IOT (Internet of Things) technology gradually grows up, along with the development of information technology, especially Internet technology, for realizing informationization, remote management control, and intelligent network. IOT connects sensors, controllers, machines, humans, and things together in new ways by using a local area network or Internet or other communication technology to form association between humans and things, and association between things and things. IOT is an extension of Internet, and encompasses Internet and all the resources on Internet, offers compatibility to all applications on Internet. As IOT technology develops, respective fields, to which the IOT technology can be applied, increasingly grow; nevertheless, a number of private protocols accompanying with various application fields emerge, which hinders the development of IOT technology.

US 2009/0292995 A1 discloses a system including a client that presents a user interface to a user, where the user interface is associated with a field device in a process control system. The system also includes an interface component having (i) an emulator that emulates a device manager associated with at least the field device and (ii) a communication manager that communicates with the field device over a communication link using a specified protocol. The system further includes a server that provides a request to the emulator based on input from the user provided through the user interface, where the emulator provides the request to the communication manager for communication to the field device. The communication manager may include a communication Device Type Manager (DTM), and the emulator emulates at least some functions of a device DTM. A device description (such as a device description or electronic device description, DD or EDD, file) could also be used to generate the user interface.

### SUMMARY

In order to improve interoperability of devices between different network application protocols, it is an object of the present invention to propose a method for operating a device, a control device thereof, and a proxy device.

The object is achieved by the features of the respective independent claims. Further embodiments are defined in the corresponding dependent claims.

According to the embodiment of the present invention, the proxy device is mapped to the CSE, the resource attribute of the proxy device IPE is added, such as "deviceDiscovery", and the attribute on the CSE is subscribed, so that the proxy device IPE can be triggered in time when the attribute is modified to send an instruction to the proxied device so as to obtain state information of the proxied device, such as state information of the OIC device. In this way, the IPE can be triggered by the AE as needed so as to query the state of the proxied device in time in the case of increasing a periodic interval at which the IPE queries the OIC device without affecting obtaining the state of the proxied device in time, reducing the power consumption of the proxy device and the proxied device.

In addition, according to the embodiment of the present invention, the proxy device is mapped to the CSE, the resource attribute of the proxy device IPE is added, such as "deviceControl", and the attribute on the CSE is subscribed, so that the proxy device IPE can be triggered in time to obtain the corresponding operating instruction from the CSE when the attribute is modified, so as to control the proxied device. In this way, the proxy device such as the IPE can be triggered by the AE as needed so as to control the proxied remote device, such as the OIC device, which improves interoperability of devices between different network application protocols.

### BRIEF DESCRIPTION OF THE DRAWINGS

The embodiments of the present disclosure will be described in connection with the drawings to explain the principles of the present disclosure. It should be understood that the elements illustrated in the drawings can be implemented in various forms of hardware, software, or combinations thereof. Optionally, these elements are implemented in a combination of hardware and software on one or more appropriately programmed general-purpose computer devices.
FIG. 1 is a schematic diagram of an IPE which serves as an example;
FIG. 2 is a block diagram of a typical configuration supported by a oneM2M architecture;
FIG. 3 illustrates an illustrative connection configuration of an IPE under an interactive framework of OIC and oneM2M protocols according to an embodiment of the present disclosure;
FIG. 4 illustrates resource attributes of an IPE according to an embodiment of the present disclosure;
FIG. 5 illustrates a process of obtaining an OIC device state via an IPE according to an embodiment of the present disclosure;
FIG. 6 illustrates a resource attribute of an IPE according to another embodiment of the present disclosure;
FIG. 7 illustrates a process of controlling an OIC device via an IPE according to an embodiment of the present disclosure;
FIG. 8 illustrates a resource attribute of an IPE according to another embodiment of the present disclosure;
FIG. 9 illustrates a process of obtaining an OIC device state via an IPE according to another embodiment of the present disclosure;
FIG. 10 illustrates a resource attribute of an IPE according to another embodiment of the present disclosure;
FIG. 11 illustrates a process of controlling an OIC device via an IPE according to another embodiment of the present disclosure;
FIG. 12 is a flow chart of a method of operating a device according to an embodiment of the present disclosure;
FIGS. 13 to 16 are flowcharts of methods of operating a device according to an embodiment of the present disclosure;
FIG. 17 is a schematic block diagram of a control device for operating a device according to an embodiment of the present disclosure;
FIG. 18 is a schematic block diagram of a control device according to another embodiment of the present disclosure;
FIG. 19 is a schematic flow chart of a method of operating a device according to an embodiment of the present disclosure;
FIG. 20 is a schematic block diagram of a proxy device for operating a device according to an embodiment of the present disclosure; and
FIG 21 is a schematic block diagram of a proxy device for operating a device according to an embodiment of the present disclosure.

### DETAILED DESCRIPTION OF THE EMBODIMENTS

Hereinafter, the embodiments of the present disclosure will be described in connection with the drawings. In the following description, detailed descriptions of known functions and configurations can be omitted for clarity and conciseness. In addition, the following embodiments are intended to illustrate the present disclosure, not to limit the scope of the present disclosure. In fact, other implementations can be conceived of by those skilled in the art based on the following embodiments of the present disclosure, as defined by the appended claims. It will thus be appreciated that those skilled in the art will be able to devise various arrangements that, although not explicitly described or illustrated herein, embody the principles of the present disclosure as defined by the appended claims.

As for entities under different IOT protocols, an entity under one protocol can be mapped as an entity under another protocol via an Interworking Proxy application Entity (IPE), thus achieving interoperability.

The principles of the embodiments of the present disclosure will be described below within the IOT-related protocol (e.g., oneM2M) framework. At present, various organizations have put forward various standards related to the IOT protocol. The inventor has noted that, an entity based on the oneM2M protocol is likely to communicate and exchange data with an entity that is not based on the oneM2M protocol within the oneM2M protocol framework. In this case, the Interworking Proxy application Entity (IPE) can be used to communicate data between the entity based on the oneM2M protocol and the entity that is not based on the oneM2M protocol, and thereby state information can be obtained from each other between the two and control on the relevant functions can be implemented.

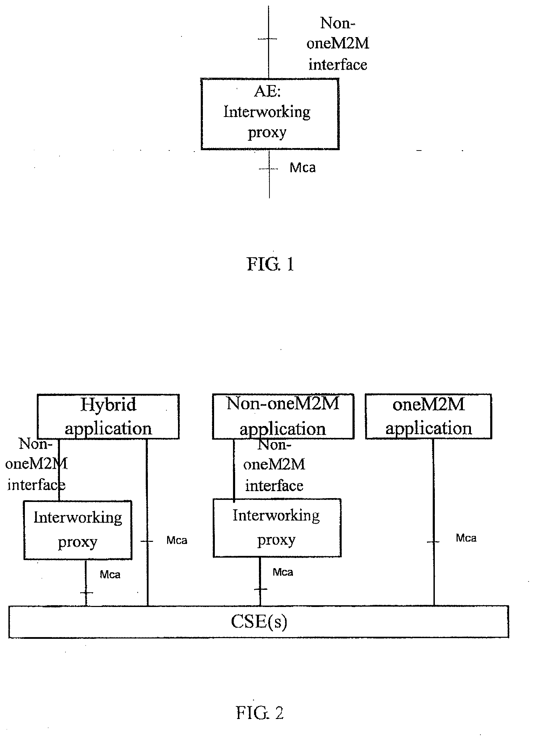

FIG. 1 is a schematic diagram of an IPE which serves as an example. As illustrated in FIG. 1, the IPE is connected to a non-oneM2M entity via a non-oneM2M interface, and connected to a oneM2M entity, such as a common service entity CSE, via a standard Mca reference point interface.

FIG. 2 is a block diagram of a typical configuration supported under a oneM2M architecture, wherein a non-oneM2M application is connected to the interworking proxy IPE via a non-oncM2M interface, and further connected to the CSE via the Mca; while the oneM2M application can be directly connected to the CSE via the Mca; besides, there can also be a hybrid application that can be connected to the CSE in the above two ways, respectively.

As an implementation, a non-oneM2M entity can be mapped as a oneM2M resource, so that an application entity accesses and controls a non-oneM2M device via an Mca interface. Next, the principles of the present disclosure will be explained by taking data exchange performed between the entity under the Open Interconnect Consortium (OIC) protocol framework and the oneM2M entity as an example. Specifically, the principles of the present disclosure are explained below by taking a case in which an OIC device exchanges data with an application entity AE by adopting the OIC protocol under the oneM2M architecture as an example. It should be understood, however, that the principles of the present disclosure are not limited to this particular case. In practice, the principles of the present disclosure can also be implemented in a case in which an entity communicates with an entity under other IOT protocols by adopting other application protocols, as long as an entity under one protocol is mapped as an entity under another protocol, such as Allseen device, LWM2M device etc., in order to achieve data exchange.

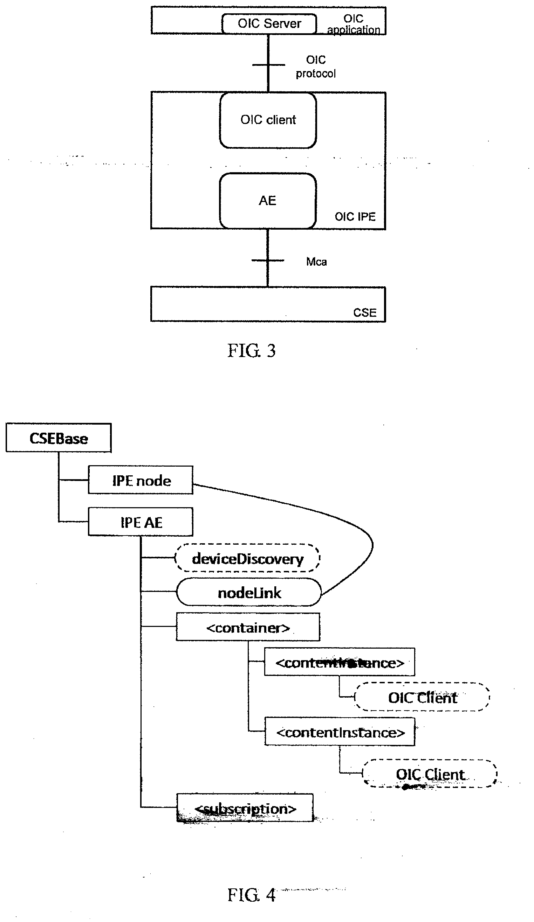

FIG. 3 illustrates an illustrative connection configuration of an IPE under an interactive framework of OIC and oneM2M protocols according to an embodiment of the present disclosure. As illustrated in FIG. 3, the IPE acts as a proxy device, and logically includes an Application Entity (AE) and an OIC client, wherein the AE interact with the CSE via the oneM2M Mca interface, and the OIC Client interact with the OIC application (e.g., OIC device or node) that serves as the OIC Server via the OIC protocol.

When the IPE obtains a resource of the proxied device, the resource can be sent initiatively or received passively. For example, in the case in which an LWM2M device is proxied, the IPE receives the resource of the LWM2M device passively.

When the proxied device is an OIC device, as illustrated in FIG. 4, since the OTC device serves as the OIC Server and the IPE serves as the OIC Client, based on this Server-Client mechanism, the IPE can obtain information of the OIC device via the OIC protocol; meanwhile, the IPE can register with the CSE under the oneM2M protocol framework, and logically serves as the AE of the CSE; in fact, the IPE uses the OIC protocol to discover the OIC resource and encapsulates the same as a content sharing resource, such as container, and other AEs can access the content sharing resource to obtain information of the OIC application. As a result, other AEs can obtain information of the OIC device by using the IPE via the CSE, thus realizing information transmission from the OIC device to the entity under the oneM2M.

As an alternative, the IPE can periodically look for the OIC device by using the OIC client. Specifically, a request can be sent, by the OIC client on the IPE, to the corresponding OIC device that serves as the OIC server, so as to obtain state information of the OIC device; and the discovered OIC device is mapped to the CSE side via the IPE, that is, a resource is created on the CSE for the OIC device, so that it is possible to access the CSE via the AE, to thereby obtain state information of the OIC device. However, this way by which the state of the OIC device is obtained depends on an interval at which the IPE looks for the OIC device. If the interval is too short, power consumption of the IPE and OIC device is relatively large, and if the interval is too long, the OIC device information cannot be obtained in time, so that it can not be able to obtain the latest OIC device information.

In order to obtain state information of the OIC device, e.g., the information on the online state, on the health state etc. of the OIC device, as needed at any time, according to an embodiment of the present disclosure, as illustrated in FIG. 4, when the IPE is mapped to the CSE as its AE, an attribute, e.g., "deviceDiscovery", required to indicate IPE to operate the corresponding OIC device, is added to the resource of the IPE, and the attribute is subscribed on the CSE corresponding to the IPE AE, so that when the resource attribute is changed, the IPE is triggered to obtain state information of the OIC device. Specifically, the IPE can be triggered to initiate a request to obtain the OIC device information when the attribute "deviceDiscovery" is set to, for example, true. In addition, the OIC Client resource is added under <container>/<contentInstance> under the IPE AE, so that the OIC Client can be mapped to the CSE.

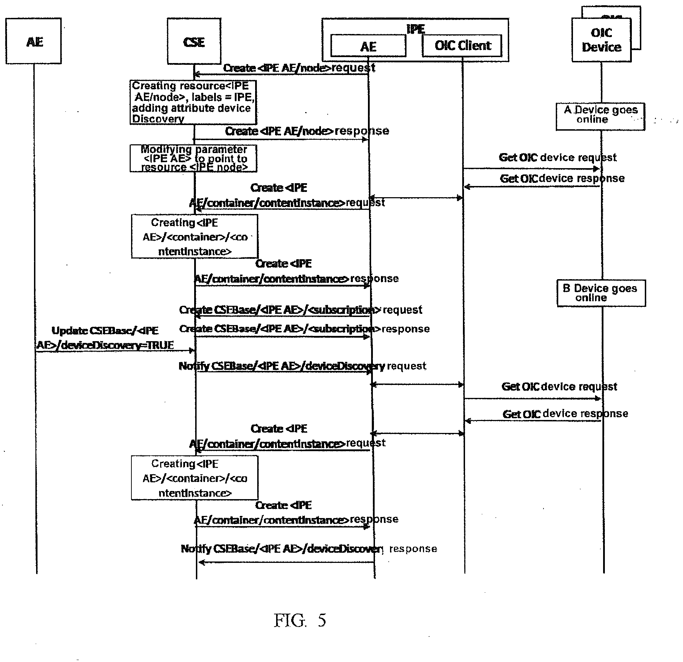

A process in which AE instructs, via the CSE, the IPE to obtain state information of the OIC device by using the added resource attribute "deviceDiscovery" according to an embodiment of the present disclosure will be described below with reference to FIG. 5. As illustrated in FIG. 5, as a proxy between the CSE and the OIC device, the AE of the IPE sends to the CSE a registration request (Create <IPE AE/node>), so as to create the corresponding resource on the CSE; after the IPE AE is authenticated, the CSE creates the resource <IPE AE/node>, wherein the identifier is labels=IPE, and the attribute deviceDiscovery is added under CSEBase/IPE AE; then, the CSE sends to the IPE. AE a response Response (Create <IPE AE/node>), and modifies a parameter value nodeLink under <IPE AE>, so as to direct to the corresponding resource <IPE node>. In addition, between the IPE and the OIC device, the IPE sends, via the OIC Client, to the OIC device a request to obtain the state of the OIC device, for example, a Get request, so as to obtain state information of the OIC device; then, the IPE receives, via the OIC Client, a GET response from the OIC device to obtain the required state information of the OIC device. The IPE sends, via the IPE AE, to the CSE a registration request Request (Create<IPE AE/container/contentInstance>), so as to map the OIC client as a content resource encapsulated in the AE to the CSE. After identification is authenticated, the CSE creates the resource <IPE AE/container/contentInstance>, so as to map the OIC client to the CSE as the content resource encapsulated in the AE; then, the CSE sends a response Response (Create <IPE AE/container/contentInstance>).

As discussed above, the IPE can periodically send, via the OIC client, to the OIC device, a request to obtain state information of the OIC device. In order to reduce power consumption of the IPE and the OIC, the periodic interval can be set as longer; meanwhile, in order to obtain the needed information in time, according to an embodiment of the present disclosure, it is possible to instruct the IPE to obtain state information of the OIC device as needed via the AE on the CSE side rather than obtaining the state information of the OIC device periodically, the specific process is as follows:

As illustrated in FIG. 5, the IPE AE sends to the CSE a subscription request Request(Create CSEBase/<IPE AE>/<subscription>), so as to track a modification to the resource attribute of the IPE AE and can be notified when the IPE AE's resource attribute has been modified; correspondingly, the CSE returns a response Response(Create CSEBase/<IPE AE>/<subscription>) to complete subscription to the resource attribute of the IPE AE.

When state information of the OIC device needs to be obtained, the AE connected to the CSE sends an update request Request(Update CSEBase/<IPE AE>/deviceDiscovery=TRUE), and changes the resource attribute deviceDiscovery of the IPE AE to True; since the resource attribute deviceDiscovery of the IPE AE is changed, according to the previous subscription request, the CSE will send to the IPE AE a notification request Request(Notify CSEBase/<IPE AE>/deviceDiscovery). After receiving the notification request from the CSE, the IPE send, via the OIC client, to the OIC device a GET request, so as to obtain state information of the OIC device; after the OIC Client receives the GET response from the OIC device, it can update the corresponding resource information that has been created for the OIC device on the CSE, so as to obtain the latest state information of the OIC device; in addition, if a new OIC device goes online before the IPE sends a GET request to the OIC device via the OIC Client, the IPE can send, via the IPE AE, to the CSE a request Create<IPE AE/container/contentInstance> to create a resource for the new online OIC device, and the CSE will create a resource <IPE AE/container/contentInstance> for the new online device based on the request, and sends a response Response(Create < IPE AE/container/contentInstance >) to the IPE AE; finally, the IPE AE sends to the CSE a corresponding notification response Response (Notify CSEBase/<IPE AE>/deviceDiscovery), so that the AE can access the CSE to obtain information of the new online OIC device.

According to the embodiment illustrated in FIG. 5, the proxy device is mapped to the CSE, the resource attribute deviceDiscovery of the proxy device IPE is added, and the attribute on the CSE is subscribed, so that the proxy device IPE can be triggered in time to send an instruction to the proxied device when the attribute is modified to obtain state information of the proxied device, such as state information of the OIC device. In this way, the IPE can be triggered by the AE as needed so as to query the state of the proxied device in time in the case of adequately increasing a periodic interval at which the IPE queries the OIC device, reducing the power consumption of the proxy device and the proxied device without affecting obtaining the state of the proxied device in time.

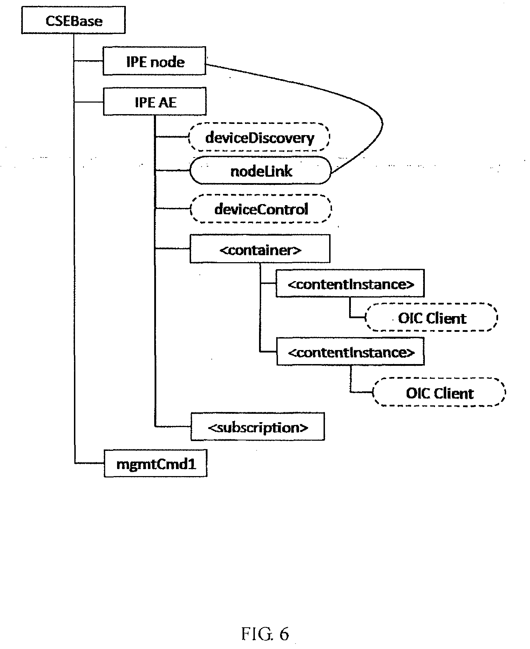

According to another aspect of the present disclosure, not only the state of the proxied device can be queried by the proxy device, but also the proxied device can be controlled by the proxy device. For example, a proxied device, such as an OIC device, can be queried and controlled by a proxy device, such as the IPE, via the OIC Client. This will be described in detail below in connection with FIGS. 6-7.

In order to control the OIC device as needed at all times, for example, controlling ON, OFF, adjusting parameters-of the OIC device, according to an embodiment of the present disclosure, as illustrated in FIG 6, when the IPE is mapped to the CSE as its AE, an attribute such as "deviceControl", which is required to instruct the IPE to operate the corresponding OIC device, is added to the resource of the IPE, and a subscription is made to the attribute on the CSE corresponding to the IPE AE, so that when the resource attribute is set, the IPE is triggered to control the OIC device accordingly. Specifically, the IPE can be triggered to control the OIC device when the attribute "deviceControl" is set to, for example, true.

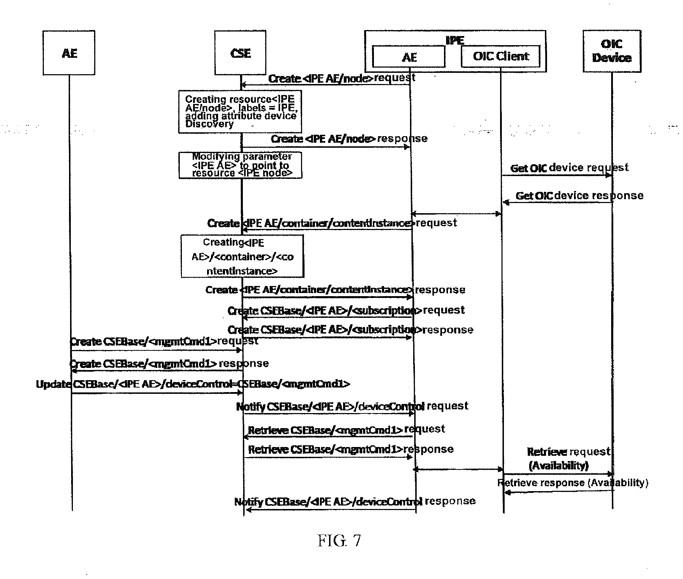

Next, the process in which the AE instructs, via the CSE, the IPE to control the OIC device by the use of the added resource attribute "deviceControl" according to an embodiment of the present disclosure will be described in connection with FIG. 7. As illustrated in FIG. 7, as a proxy between the CSE and the OIC device, the AE of the IPE sends to the CSE a registration request Request(Create<IPE AE/node>), so as to create a corresponding resource on the CSE; when the IPE AE is authenticated, the CSE creates the resource <IPE AE/node>, wherein the identifier is labels=IPE, and the attribute deviceControl is added under CSEBase/IPE AE; then, the CSE sends to the IPE AE a response Response(Create <IPE AE/node>), and modifies a parameter value nodeLink under <IPE AE>, to make it point to the corresponding resource <IPE node>. In addition, between the IPE and the OIC device, the IPE can send, via the OIC Client, to the OIC device a request to obtain the state of the OIC device, for example, a Get request, so as to obtain state information of the OIC device; then, the IPE receives, via the OIC Client; a GET response from the OIC device to obtain the required state information of the OIC device. The IPE sends, via IPE AE, to the CSE a registration request Request (Create<IPE AE/container/contentInstance>), so as to map the OIC client as a content sharing resource encapsulated in the AE to the CSE. After being authenticated, the CSE creates the resource <IPE AE/container/contentInstance>, so as to map the OIC client as the content sharing resource encapsulated in the CSE application entity; then, the CSE sends a response Response (Create<IPE AE/container/contentInstance>).

As discussed above, the IPE can periodically send, via the OIC client, to the OIC device a request to obtain state information of the OIC device.

In addition, in order to control the OIC device as needed, according to an embodiment of the present disclosure, triggering the IPE to control the OIC device as needed can be implemented via the AE at the CSE side, the specific process is as follows:

As illustrated in FIG. 7, the IPE AE sends to the CSE a subscription request Request(Create CSEBase/<IPE AE>/<subscription>), so as to track a modification to the resource attribute of the IPE AE, so as to be notified when the IPE AE's resource attribute has been modified; correspondingly, the CSE returns a response Response(Create CSEBase/<IPE AE>/<subscription>) to complete subscription to the resource attribute of the IPE AE.

In order to control the OIC device by the IPE, the AE connected to the CSE sends to the corresponding CSE a resource creation request Request(Create CSEBase/<mgmtCmdl>), so that the CSE can accommodate the control instruction sent from the AE; after resource creation is completed, the AE receives a response Response(Create CSEBase/<mgmtCmdl>). When it needs control the OIC device, the AE sends an update request Update CSEBase/<IPE AE>/deviceControl = CSEBase/<mgmtCmd1>, so as to set the attribute CSEBase/<IPE AE>/deviceControl to CSEBase/<mgmtCmdl>; since the resource attribute deviceControl of the IPE AE is changed, the CSE will send to the IPE AE a notification request Notify CSEBase/<IPE AE>/deviceControl based on the previous subscription request. When the IPE AE receives the notification request sent by the CSE, the IPE AE is triggered to obtain a corresponding operating instruction Retrieve <CSEBase/mgmtCmd1> from the CSE for controlling the OIC device, and receive a response Response (Retrieve <CSEBase/mgmtCmd1>) accordingly; thus, the IPE has obtained the operation instruction from the AE and can send, via the OIC Client, to the OIC device a request to control the OIC device, such as Retrieve (Availability), so as to obtain availability of the OIC device; of course, it is also possible to correspondingly control the OIC device according to the parameter value in the previously set attribute mgmtcmd1, for example, controlling the OIC device to be ON, OFF, or adjusting the parameter of OIC, and the IPE receives a response such as Response (Retrieve (Availability)) from the OIC device via the OIC Client, so as to obtain a result of controlling the OIC Device, and finally, the IPE AE sends to the CSE a corresponding notification response Response (Notify CSCBase/<IPE AE>/deviceControl).

According to the embodiment illustrated in FIG. 7, the proxy device is mapped to the CSE, the resource attribute deviceControl of the proxy device is added, and the attribute on the CSE is subscribed, so that the proxy device IPE can be triggered in time to obtain the corresponding operation instruction from the CSE when the attribute is modified, so as to control the proxied device. In this way, it is possible to control the proxied remote device such as the OIC device by triggering the proxy device such as the IPE via the AE as needed, and thereby interoperability of devices between different network application protocols is improved.

The embodiments in which state information of the proxied device is obtained and the proxied device is controlled by the proxy device are described above with respect to FIGS. 4-5 and 6-7, and it will be understood by those skilled in the art that the principles of the above embodiments can be combined together; in other words, both the attributes deviceControl and deviceDiscovery can be added under the IPE AE, consequently, not only that state information of the device can be obtained in time, but also various controls can be performed on the device as needed. In practice, according to the principles of the present disclosure, in order to implement operations on the proxied device, other resource attributes can also be created for operating the proxied device, it is not limited to the above-described deviceControl and deviceDiscovery, and such implementations shall also belong to the protection scope of the present disclosure, as defined by the appended claims.

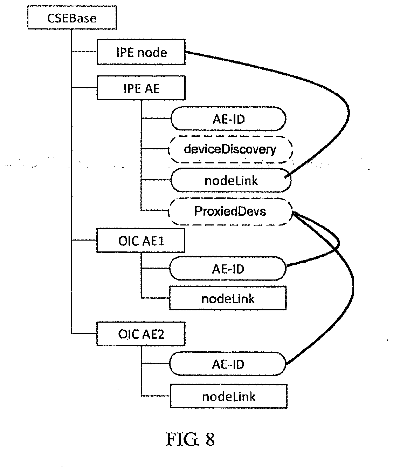

As an option, the IPE can register with the CSE under the oneM2M protocol framework, and the IPE logically serves as the AE of the CSE; the IPE uses the OIC protocol to discover the OIC resource and the OIC resource logically serves as another AE of the CSE. In this case, as illustrated in FIG. 8, not only the attribute such as "deviceDiscovery" required to instruct the IPE to operate the corresponding OIE device is added to the resource of the IPE, but also the attribute "ProxiedDevs" is added, so as to associate the IPE AE with the proxied OIC device.

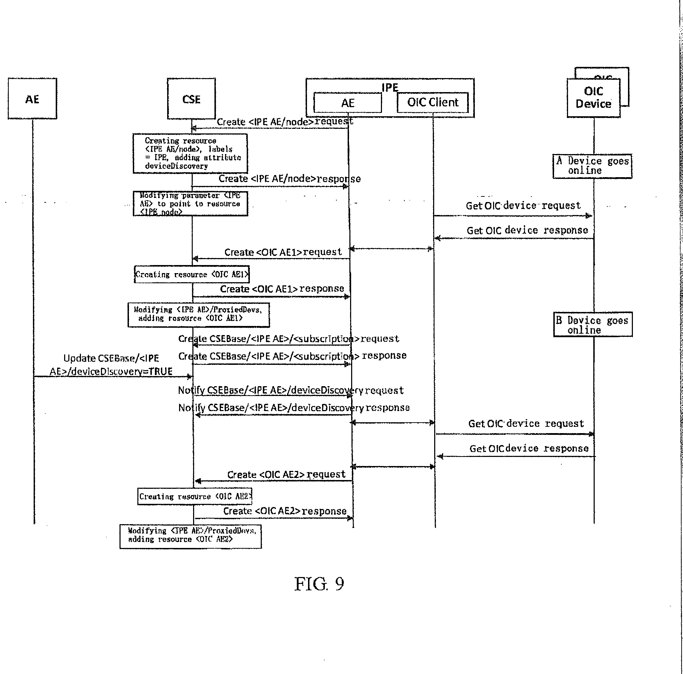

The process in which AE instructs, via the CSE, the IPE to obtain state information of the OIC device by using the added resource attributes "deviceDiscovery" and "ProxiedDevs" according to an embodiment of the present disclosure is described below with reference to FIG. 9. As illustrated in FIG. 9, as a proxy between the CSE and the OIC device, the AE of the IPE sends a registration request (Create <IPE AE/node>) to the CSE, so as to create the corresponding resource on the CSE; when the IPE AE is authenticated, the CSE creates the resource <IPE AE/node>, wherein the identifier is labels=IPE, and the attribute deviceDiscovery and ProxiedDevs are added under CSEBase/IPE AE; then, the CSE sends to the TPE AE a response Response (Create <IPE AE/node>), and modifies a parameter value nodeLink under <IPE AE>, to make it point to the corresponding resource <IPE node>. In addition, between the IPE and the OIC device, the IPE sends, via the OIC Client, to the OIC device a request to obtain the state of the OIC device, for example, a Get request, so as to obtain state information of the OIC device; then, the IPE receives, via the OIC Client, a GET response from the OIC device to obtain the required state information of the OIC device. The IPE sends, via IPE AE, to the CSE a registration request Request(Create <OIC AE1>), so as to map the OIC device to the CSE as an AE. After being authenticated, the CSE creates the resource <OIC AE1 >, so as to map the OIC device as an application entity of the CSE; then, the CSE sends a response Response(Create <OIC AE1>), and modifies the attribute ProxiedDevs under <IPE AE>, to add the resource OIC AE1 thereto, so as to associate the IPE AE with the OIC1 device to be proxied.

As discussed above, the IPE can periodically send, via the OIC client, to the OIC device, a request to obtain state information of the OIC device. In order to reduce power consumption of the IPE and the OIC, the periodic interval can be set as longer; meanwhile, in order to obtain the needed information in time, according to an embodiment of the present disclosure, it is possible to instruct the IPE to obtain state information of the OIC device as needed via the AE on the CSE side, and it is not limited to obtaining state information of the OIC device periodically, the specific process is as follows:

As illustrated in FIG.9, the IPE AE sends to the CSE a subscription request Request(Create CSEBase/<IPE AE>/<subscription>), so as to track a modification to the resource attribute of the IPE AE, so as to be notified when the IPE AE's resource attribute has been modified; correspondingly, the CSE returns a response Response(Create CSEBase/<IPE AE>/<subscription>), to complete subscription to the resource attribute of the IPE AE.

When state information of the OIC device needs to be obtained, the AE connected to the CSE sends an update request Request(Update CSEBase/<IPE AE>/deviceDiscovery=TRUE), changes the resource attribute deviceDiscovery of the IPE AE to True; since the resource attribute deviceDiscovery of the IPE AE is modified, according to the previous subscription request, the CSE will send to the IPE AE a notification request Request(Notify CSEBase/<IPE AE>/deviceDiscovery), and receives a corresponding notification response Response(Notify CSEBase/<IPE AE>/deviceDiscovery). After receiving the notification request from the CSE, the IPE sends, via the OIC client, to the OIC device a GET request, so as to obtain state information of the OIC device; after the OIC Client receives the GET response from the OIC device, it can update the corresponding resource information that has been created for the OIC device on the CSE, so as to obtain the latest state information of the OIC device; in addition, if a new OIC device goes online, the IPE can send, via the IPE AE, to the CSE a request Create <OIC AE2> to create a resource for the new online OIC device, so that the AE can obtain information of the new on-line OIC device by accessing the CSE; after being authenticated, the CSE creates the resource <OIC AE2>, so as to map the new on-line OIC device to the application entity of the CSE; then, the CSE sends a response Response (Create <OIC AE2>), and modifies the attribute ProxiedDevs under <IPE AE>, to add the resource OIC AE2 thereto, so as to associate the IPE AE with the new on-line OIC device.

According to the embodiment illustrated in FIG. 9, the proxy device is mapped to the CSE as one application entity thereof and the proxied device is mapped to the CSE as another application entity thereof, and the resource attribute ProxiedDevs is added to the proxy device IPE, so that the proxy device and the proxied device are associated with each other. By subscribing to the attribute deviceDiscovery of the proxy device on the CSE, the proxy device IPE can be triggered in time when the attribute is modified, so as to send an instruction to the proxied device to obtain state information of the proxied device, such as state information of the OIC device. In this way, the IPE can be triggered by the AE as needed so as to query the state of the proxied device in time in the case of increasing a periodic interval at which the IPE queries the OIC device without affecting obtaining the state of the prox ied device in time while reducing the power consumption of the proxy device and the proxied device.

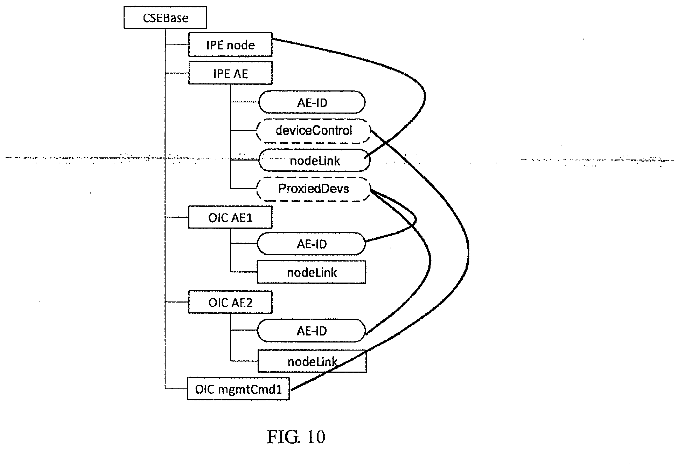

According to another aspect of the present disclosure, not only the state of the proxied device can be queried by the proxy device, but also the proxied device can be controlled by the proxy device. For example, a proxied device, such as an OIC device, can be queried and controlled by a proxy device, such as an IPE, via the OIC Client. This will be described in detail below in connection with FIGS. 10-11.

In order to control the OIC device as needed at all times, for example, controlling ON, OFF, adjusting parameters of the OIC device, according to an embodiment of the present disclosure, as illustrated in FIG. 10, when the IPE is mapped to the CSE as its AE, an attribute such as "deviceControl" required to instruct the IPE to operate the corresponding OIC device is added to the resource of the IPE, and a subscription is made to the attribute on the CSE corresponding to the IPE AE, so that when the resource attribute is set, the IPE is triggered to control the OIC device accordingly. In addition, according to this embodiment, the proxied device is also mapped to the CSE, and in order to associate the proxy device with the proxied device, the attribute "ProxiedDevs" is also added to the IPE AE.

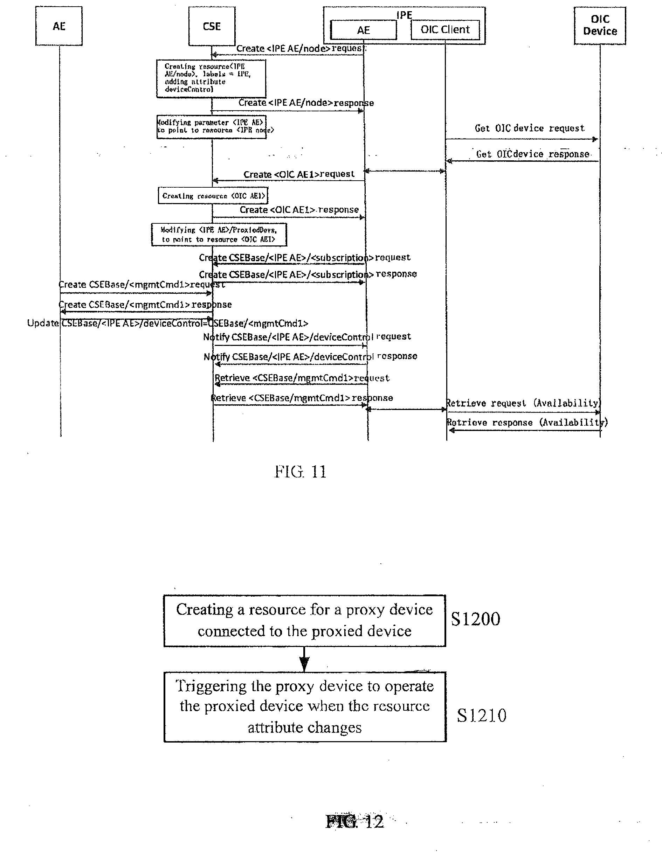

Next, the process in which the AE instructs via the CSE the IPE to control the OIC device by the use of the added resource attribute "deviceControl" according to an embodiment of the present disclosure will be described in connection with FIG. 11. As illustrated in FIG. 11, as a proxy between the CSE and the OIC device, the AE of the IPE sends to the CSE a registration request Request(Create<IPE AE/node>), so as to create a corresponding resource on the CSE; when the IPE AE is authenticated, the CSE creates the resource <IPE AE/node>, wherein the identifier is labels = IPE, and the attribute deviceControl is added under CSEBase/IPE AE; then, the CSE sends to the IPE AE a response Response(Create <IPE AE/node>), and modifies a parameter value nodeLink under <IPE AE>, to make it point to the corresponding resource <IPE node>. In addition, between the IPE and the OIC device, the IPE can send, via the OIC Client, to the OIC device a request to obtain the state of the OIC device, for example, a Get request, so as to obtain state information of the OIC device; then, the IPE receives, via the OIC Client, a GET response from the OIC device to obtain the required state information of the OIC device. The IPE sends, via the IPE AE, to the CSE a registration request Request Request(Create <OIC AE1>), so as to map the OIC device to the CSE as the application entity of the CSE. After identification is authenticated, the CSE creates the resource <OIC AE1>, so as to map the OIC client as an application entity of the CSE; then, the CSE sends a response Response (Create <OIC AE1>), and modifies the attribute ProxiedDevs under <IPE AE>, to make it point to the resource OIC AE1, so as to associate the IPE AE with the OIC device to be proxied.

In addition, in order to control the OIC device as needed, according to an embodiment of the present disclosure, triggering the IPE to control the OIC device as needed can be implemented via the AE at the CSE side, and the specific process is as follows:

As illustrated in FIG. 11, the IPE AE sends to the CSE a subscription request Request(Create CSEBase/<IPE AE>/<subscription>), so as to track a modification to the resource attribute of the IPE AE, in order to be notified in time when the IPE AE's resource attribute has changed; correspondingly, the CSE returns a response Response(Create CSEBase/<IPE AE>/<subscription>), to complete subscription to the resource attribute of the IPE AE.

In order to control the OIC device via the IPE, the AE connected to the CSE sends to the corresponding CSE a resource creation request Request(Create CSEBase/<mgmtCmdl>), for the CSE to accommodate the control instruction sent from the AE; after resource creation is completed, the AE receives a response Response(Create CSEBase/< mgmtCmdl>). When it needs to control the OIC device, the AE sends an update request Update CSEBase/<IPE AE>/deviceControl=CSEBase/<mgmtCmd1>, so as to set the attribute CSEBase/<IPE AE>/deviceControl to CSEBase/<mgmtCmdl>; since the resource attribute deviceControl of the IPE AE is changed, based on the previous subscription request, the CSE will send to the IPE AE a notification request Notify CSEBase/<IPE AE>/deviceControl, and receives a corresponding notification response Response(Notify CSEBase/<IPE AE>/deviceControl). When the IPE AE receives the notification request sent by the CSE, the IPE AE is triggered to obtain from the CSE a corresponding operating instruction Retrieve <CSEBase/mgmtCmd1> for controlling the OIC device, and receive a response Response (Retrieve <CSEBase/mgmtCmd1>) accordingly; thus, the IPE has obtained the operation instruction from the AE, and can send, via the OIC Client, to the OIC device a request to control the OIC device, such as Retrieve (Availability), so as to obtain availability of the OIC device; of course, it is also possible to correspondingly control the OIC device according to the parameter values in the previously set attribute mgmtcmd1, for example, controlling the OIC device to be ON, OFF, or adjusting the parameters thereof, and the IPE receives a response such as Response (Retrieve (Availability))from the OIC device via the OIC Client, to obtain a result of controlling the OIC Device.

According to the embodiment illustrated in FIG. 11, the proxy device is mapped to the CSE as one application entity thereof, the proxied device is mapped to the CSE as another application entity thereof, and the resource attribute ProxiedDevs is added to the proxy device IPE, so that the proxy device and the proxied device are associated with each other. By adding the resource attribute devicecontrol of the proxy device and subscribing to this attribute on the CSE, the proxy device IPE can be triggered in time when the attribute is modified to obtain the corresponding operation instruction from the CSE, so as to control the proxied device. In this way, it is possible to control the proxied remote device such as the OIC device by triggering the proxy device such as IPE via the AE as needed, and thereby interoperability of devices between different network application protocols is improved.

The embodiments of obtaining state information of the proxied device and controlling the proxied device by the proxy device are described with respect to FIGS. 8-9 and 10-11, and it will be understood by those skilled in the art that the principles of the above embodiments can be combined together; in other words, both the attributes deviceControl and deviceDiscovery can be added under the IPE AE; consequently, not only that state information of the device can be obtained in time, but also various controls can be performed on the device as needed. In addition, in order to associate the proxy device with the proxied device, the attribute ProxiedDevs added for the IPE AE is merely an example. In fact, according to the principles of the present disclosure, in order to implement operations on the proxied device, it is also possible to create other resource attributes used to achieve the same functionality as needed, and such implementations shall also belong to the protection scope of the present disclosure, as defined by the appended claims.

Although the principles of embodiments of the present disclosure are illustrated with examples in connection with FIGs. 5, 7, 9, and 11, it is to be noted that, in the above examples, the common service entity CSE modifies the corresponding resource attributes in the case of receiving the request of operating the proxied device OIC as sent from the AE which serves as the terminal device, so as to trigger the proxy device to operate the proxied device. According to another embodiment of the present disclosure, it is also possible to preset a condition without receiving a request sent from the terminal device AE, for example, setting a condition for periodically modifying the resource attribute, and when the condition is satisfied, the CSE automatically modifies the corresponding resource attribute, thereby triggering the proxy device to operate the proxied device.

FIG. 12 illustrates a method of operating a device according to an embodiment of the present disclosure, the method comprises: S1200 creating a resource for a proxy device connected to the device, the resource including a resource attribute required to operate the device via the proxy device; and S1210 triggering the proxy device to operate the device when the resource attribute is modified.

Optionally, according to an embodiment of the present disclosure, the method further comprises: receiving a request to operate the proxied device, and modifying the resource attribute according to the request.

Optionally, the method further comprises: modifying the resource attribute according to a preset condition.

Optionally, the method further comprises: receiving a subscription request sent from the proxy device before the resource attribute is modified.

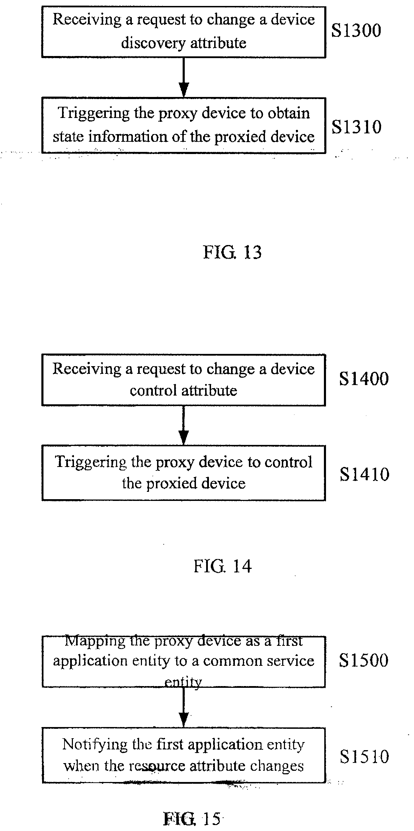

Optionally, according to an embodiment of the present disclosure, as illustrated in FIG. 13, the method comprises: S1300 receiving a request to modify a device discovery attribute, and S1310 triggering the proxy device to obtain state information of the proxied device.

Optionally, according to an embodiment of the present disclosure, as illustrated in FIG. 14, the method comprises: S1400 receiving a request to modify a device control attribute, and S1410, triggering the proxy device to control the proxied device.

Optionally, according to an embodiment of the present disclosure, as illustrated in FIG. 15, the method comprises: S1500, mapping the proxy device as a first application entity to a common service entity according to the created resource; and S1510 notifying the first application entity when the resource attribute is modified.

Optionally, according to an embodiment of the present disclosure, the method further comprises: creating a resource for the device, mapping the device as a content sharing resource encapsulated in the first application entity to the common service entity.

Optionally, according to an embodiment of the present disclosure, the method further comprises: creating a resource for the device, and mapping the device as a second application entity to the common service entity.

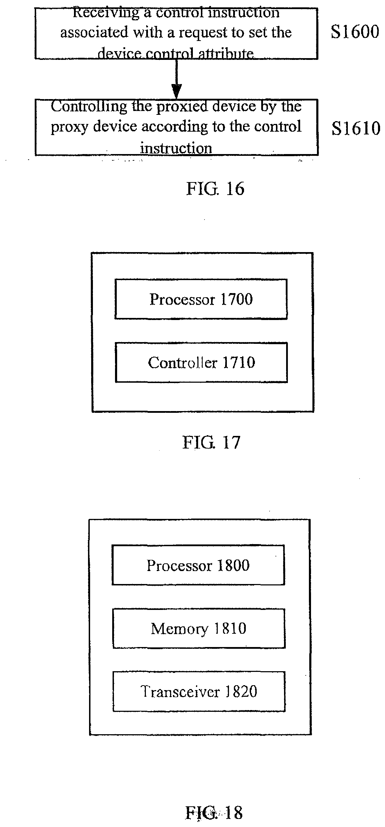

Optionally, according to an embodiment of the present disclosure, as illustrated in FIG. 16, the method further comprises: S1600 receiving a control instruction associated with a request to set the device control attribute; and S1610 controlling the device by the proxy device according to the control instruction.

Optionally, according to an embodiment of the present disclosure, the device is an IOT terminal device.

Optionally, according to an embodiment of the present disclosure, the device is at least one of an open Internet OIC device, an Allseen device, and an LWM2M device.

FIG. 17 is a schematic block diagram of a control device for operating a device according to an embodiment of the present disclosure. As illustrated in FIG. 17, the control device comprises a processor 1700 for creating a resource for a proxy device connected to the device, the resource including a resource attribute required to operate the device via the proxy device; and a controller 1710 for triggering the proxy device to operate the device when the resource attribute is modified.

Optionally, the control device can integrate a memory or be connected to an external memory for storing the created resource

FIG. 18 is a schematic block diagram of a control device according to another embodiment of the present disclosure. As illustrated in FIG. 18, the control device comprises a processor 1800, a memory 1810 connected to the processor, and a transceiver 1820, wherein the memory stores instructions, the processor is configured to execute the following steps when running instructions stored in the memory: creating a resource for a proxy device connected to a device, the resource including a resource attribute required to operate the device via the proxy device; and triggering the proxy device to operate the device when the resource attributed modified.

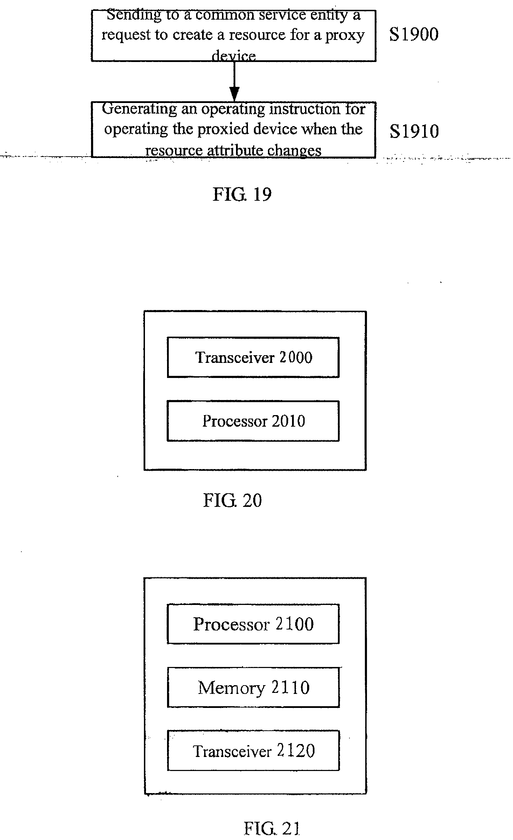

FIG. 19 is a schematic flow chart of a method of operating a device according to an embodiment of the present disclosure. As illustrated in FIG. 19, the method comprises: S1900 sending to a common service entity a request to create a resource for a proxy device, the resource including a resource attribute required to operate the device via the proxy device; and S1910 generating an operating instruction for operating the device when the resource attribute is modified.

Optionally, according to an embodiment of the present disclosure, the method further comprises: sending a subscription request to the common service entity, and receiving a notification from the common service entity when the resource attribute is modified.

Optionally, according to an embodiment of the present disclosure, the notification includes a request to trigger the proxy device to operate the device.

Optionally, according to an embodiment of the present disclosure, the resource attribute includes a device discovery attribute, wherein the state information of the device is obtained when the device discovery attribute is modified.

Optionally, according to an embodiment of the present disclosure, the resource attribute further includes a device control attribute, wherein the device is controlled when the device control attribute is modified.

Optionally, according to an embodiment of the present disclosure, the proxy device is mapped to the common service entity as a first application entity according to the created resource, and the first application entity is notified when the resource attribute is changed.

Optionally, according to an embodiment of the present disclosure, the method further comprises: sending to the common service entity a request to create a resource for the proxied device, so as to map the proxied device as a content sharing resource encapsulated in the first application entity to the common service entity.

Optionally, according to an embodiment of the present disclosure, the method further comprises: sending to the common service entity a request to create a resource for the proxied device so as to map the proxied device as a second application entity to the common service entity.

Optionally, according to an embodiment of the present disclosure, the method further comprises: obtaining a control instruction from the common service entity, generating an operating instruction for operating the proxied device according to the control instruction so as to control the proxied device.

FIG. 20 is a schematic block diagram of a proxy device for operating a device according to an embodiment of the present disclosure. As illustrated in FIG. 20, the proxy device comprises: a transceiver 2000 for sending a request to create a resource to a common service entity that communicates with the proxy device, the resource including a resource attribute required to operate the device via the proxy device; and a processor 2010 for generating an operating instruction for operating the device when the resource attribute is changed.

FIG. 21 is a schematic block diagram of a proxy device for operating a device according to an embodiment of the present disclosure. As illustrated in FIG. 21, the proxy device comprises: a processor 2100, a memory 2110 connected to the processor, and a transceiver 2120, wherein the memory stores instructions, the processor is configured to execute the following steps when running instructions stored in the memory: controlling the transceiver 2120 to send to a common service entity a request to create a resource for the proxy device, the resource including a resource attribute required to operate the device via the proxy device; and generating by the processor 2100 an operating instruction for operating the device when the resource attribute is changed.

According to the embodiment of the present disclosure, the proxy device is mapped to the CSE, the resource attribute of the proxy device IPE is added, such as deviceDiscovery, and the attribute on the CSE is subscribed, so that the proxy device IPE can be triggered in time when the attribute is modified to send an instruction to the proxied device so as to obtain state information of the proxied device, such as state information of the OIC device. In this way, the AE can trigger the IPE to query the state of the proxied device in time as needed. In addition, according to the embodiment of the present disclosure, the proxy device is mapped to the CSE, the resource attribute of the proxy device IPE is added, such as deviceControl, and the attribute on the CSE is subscribed, so that the proxy device IPE can be triggered in time when the attribute is modified to obtain the corresponding operating instruction from the CSE, so as to control the proxied device. According the above embodiments, interoperability of devices between different network application protocols can be improved.

Thus it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which can be substantially represented in computer readable media and so executed by a computer or processor, whether or not such computer or processor is explicitly illustrated. The written computer readable medium and codes can be implemented in a transient state (signal) and a non-transient state (e.g., on a tangible medium such as a CD-ROM, DVD, Blu-ray, hard disk drive, flash memory card, or other type of tangible storage medium).

The functions of the various elements illustrated in the figures can be provided through the use of dedicated hardware as well as hardware capable of executing software in association with appropriate software. When provided by a processor, the functions can be provided by a single dedicated processor, by a single shared processor, or by a plurality of individual processors, some of which can be shared. Moreover, explicit use of the term "processor" or "controller" should not be construed to refer exclusively to hardware capable of executing software, and can implicitly include, without limitation, digital signal processor ("DSP") hardware, read only memory ("ROM") for storing software, random access memory ("RAM"), and nonvolatile storage.

Other hardware, conventional and/or custom, can also be included. Similarly, any switches illustrated in the figures are conceptual only. Their function can be carried out through the operation of program logic, through dedicated logic, through the interaction of program control and dedicated logic, or even manually, the particular technique being selectable by the implementer as more specifically understood from the context.

Although the embodiment which incorporates the teachings of the present disclosure has been illustrated and described in detail herein, those skilled in the art can readily devise many other varied embodiments that still incorporate these teachings. It is noted that modifications and variations can be made by persons skilled in the art in light of the above teachings, as defined by the appended claims.

Some specific embodiments have been described above. It should be understood that modifications can be made to these embodiments. For example, elements of different embodiments can be combined, supplemented, modified, and deleted to obtain other embodiments. Tn addition, it will be understood by those of ordinary skill in the art that other structures and processes can be used in place of the structures and processes that have been disclosed above to obtain other embodiments. The other embodiments at least achieve substantially the same function in substantially the same way, so as to achieve substantially the same effect provided by the embodiments disclosed in the present disclosure. Accordingly, these and other embodiments should be within the scope of the present disclosure, as defined by the appended claims.

## Claims

1. A method of operating a proxied device, comprising:
creating a resource for a proxy device connected to the proxied device (S1200), the resource including a resource attribute required to operate the proxied device via the proxy device; and
triggering the proxy device to operate the proxied device when the resource attribute is modified (S1210);
**characterized in that**
the proxy device is mapped as a first application entity to a common service entity according to the created resource (S1500), and
the first application entity is notified when the resource attribute is modified (S1510).

2. The method according to claim 1, further comprising:
receiving a request to operate the proxied device (S1300; S1400), and modifying the resource attribute according to the request;
preferably, wherein the proxied device is an internet of things, IOT, terminal device.

3. The method according to claim 1, further comprising:
modifying the resource attribute according to a preset condition.

4. The method according to any one of claims 1 to 3, further comprising:
receiving a subscription request sent from the proxy device before the resource attribute is modified.

5. The method according to any one of claims 2 to 4, wherein the resource attribute includes a device discovery attribute; and when the device discovery attribute is modified, the proxy device is triggered to obtain state information of the proxied device (S1310).

6. The method according to any one of claims 2 to 4, wherein the resource attribute includes a device control attribute; and when the device control attribute is modified, the proxy device is triggered to control the proxied device (S1410).

7. The method according to claim 1, further comprising:
creating a resource for the proxied device, mapping the proxied device as a content sharing resource encapsulated in the first application entity to the common service entity or mapping the proxied device as a second application entity to the common service entity.

8. The method according to claim 6, further comprising:
receiving a control instruction associated with a request to modify the device control attribute (S1600), triggering the proxy device to control the proxied device according to the control instruction (S1610).

9. A system for operating a proxied device, comprising a control device, a proxy device, and the proxied device,
wherein the control device comprises:
a processor (1700) configured to create a resource for a proxy device connected to the proxied device, the resource including a resource attribute required to operate the proxied device via the proxy device; and
a controller (1710) configured to trigger the proxy device to operate the proxied device when the resource attribute is modified;
**characterized in that**
the proxy device is mapped as a first application entity to a common service entity according to the created resource (S1500), and
the first application entity is notified when the resource attribute is modified (S1510).

10. A method of operating a proxied device, comprising:
sending to a common service entity a request to create a resource for a proxy device, the resource including a resource attribute required to operate the proxied device via the proxy device (S1900); and
generating an operating instruction for operating the proxied device when the resource attribute is modified (S1910);
**characterized in that**
the proxy device is mapped to the common service entity as a first application entity according to the created resource, and
the first application entity is notified when the resource attribute is modified.

11. The method according to claim 10, wherein the method further comprises:
sending a subscription request to the common service entity, and receiving a notification from the common service entity when the resource attribute is modified.

12. The method according to claim 11, further comprising:
sending to the common service entity a request to create a resource for the proxied device, so as to map the proxied device as a content sharing resource encapsulated in the first application entity to the common service entity or map the proxied device as a second application entity to the common service entity.

13. The method according to claim 12, wherein, the notification includes a request to trigger the proxy device to operate the proxied device and the resource attribute includes at least one of a device discovery attribute and a device control attribute, wherein state information of the proxied device is obtained when the device discovery attribute is modified, and the proxied device is controlled when the device control attribute is modified.

14. The method according to claim 12 or 13, further comprising:
obtaining a control instruction from the common service entity, generating an operating instruction for operating the proxied device according to the control instruction so as to control the proxied device.

15. A proxy device for operating a proxied device, comprising:
a transceiver (2000) configured to send a request to create a resource to a common service entity that communicates with the proxy device, the resource including a resource attribute required to operate the proxied device via the proxy device; and
a processor (2010) configured to generate an operating instruction for operating the proxied device when the resource attribute is modified;
**characterized in that**
the proxy device is mapped to the common service entity as a first application entity according to the created resource, and
the first application entity is notified when the resource attribute is modified.

## Patentansprüche

1. Verfahren zum Betreiben einer proxied-Vorrichtung, aufweisend:
Erzeugen einer Ressource für eine Proxy-Vorrichtung, die mit der proxied-Vorrichtung verbunden ist (S1200), wobei die Ressource ein Ressourcenattribut enthält, das erforderlich ist, um die proxied-Vorrichtung über die Proxy-Vorrichtung zu betreiben; und
Ansteuern der Proxy-Vorrichtung, die proxied-Vorrichtung zu betreiben, wenn das Ressourcenattribut modifiziert wird (S1210);
**dadurch gekennzeichnet, dass**
die Proxy-Vorrichtung als eine erste Anwendungsentität auf eine gemeinsame Dienstentität gemäß der erzeugten Ressource abgebildet wird (S1500), und
die erste Anwendungsentität benachrichtigt wird, wenn das Ressourcenattribut modifiziert wird (S1510).

2. Verfahren nach Anspruch 1, ferner aufweisend:
Empfangen einer Anforderung, die proxied-Vorrichtung zu betreiben (S1300; S1400), und Modifizieren des Ressourcenattributs gemäß der Anforderung;
vorzugsweise, wobei die proxied-Vorrichtung ein Internet-der-Dinge-, IOT-, Endgerät ist.

3. Verfahren nach Anspruch 1, ferner aufweisend:
Modifizieren des Ressourcenattributs gemäß einer voreingestellten Bedingung.

4. Verfahren nach einem der Ansprüche 1 bis 3, das ferner Folgendes aufweist:
Empfangen einer von der Proxy-Vorrichtung gesendeten Abonnement-Anforderung, bevor das Ressourcen-Attribut modifiziert wird.

5. Verfahren nach einem der Ansprüche 2 bis 4, wobei das Ressourcenattribut ein Vorrichtungserkennungsattribut enthält; und wenn das Vorrichtungserkennungsattribut modifiziert wird, die Proxy-Vorrichtung angesteuert wird, Zustandsinformationen der proxied-Vorrichtung zu erhalten (S1310).

6. Verfahren nach einem der Ansprüche 2 bis 4, wobei das Ressourcenattribut ein Vorrichtungssteuerungsattribut enthält; und wenn das Vorrichtungssteuerungsattribut modifiziert wird, die Proxy-Vorrichtung angesteuert wird, die proxied-Vorrichtung zu steuern (S1410).

7. Verfahren nach Anspruch 1, ferner aufweisend:
Erzeugen einer Ressource für die proxied-Vorrichtung, Abbilden der proxied-Vorrichtung als eine Inhalte teilende Ressource, die in der ersten Anwendungsentität gekapselt ist, auf die gemeinsame Dienstentität oder Abbilden der proxied-Vorrichtung als eine zweite Anwendungsentität auf die gemeinsame Dienstentität.

8. Verfahren nach Anspruch 6, ferner aufweisend:
Empfangen eines Steuerbefehls in Verbindung mit einer Anforderung, das Vorrichtungssteuerungsattribut zu modifizieren (S 1600), Ansteuern der Proxy-Vorrichtung, die proxied-Vorrichtung gemäß dem Steuerbefehl zu steuern (S 1610).

9. System zum Betreiben einer proxied-Vorrichtung, das eine Steuervorrichtung, eine Proxy-Vorrichtung und die proxied-Vorrichtung aufweist,
wobei die Steuervorrichtung aufweist:
einen Prozessor (1700), der konfiguriert ist, eine Ressource für eine Proxy-Vorrichtung zu erzeugen, die mit der proxied-Vorrichtung verbunden ist, wobei die Ressource ein Ressourcenattribut enthält, das erforderlich ist, um die proxied-Vorrichtung über die Proxy-Vorrichtung zu betreiben; und
eine Steuerung (1710), die konfiguriert ist, die Proxy-Vorrichtung anzusteuern, die proxied-Vorrichtung zu betreiben, wenn das Ressourcenattribut modifiziert wird;
**dadurch gekennzeichnet, dass**
die Proxy-Vorrichtung als eine erste Anwendungsentität auf eine gemeinsame Dienstentität gemäß der erzeugten Ressource (S 1500) abgebildet wird, und
die erste Anwendungsentität benachrichtigt wird, wenn das Ressourcenattribut modifiziert wird (S 1510).

10. Verfahren zum Betreiben einer proxied-Vorrichtung, aufweisend:
Senden einer Anforderung an eine gemeinsame Dienstentität, um eine Ressource für eine Proxy-Vorrichtung zu erzeugen, wobei die Ressource ein Ressourcenattribut enthält, das zum Betreiben der proxied-Vorrichtung über die Proxy-Vorrichtung erforderlich ist (S1900); und
Erzeugen einer Betriebsanweisung zum Betreiben der proxied-Vorrichtung, wenn das Ressourcenattribut modifiziert wird (S1910);
**dadurch gekennzeichnet, dass**
die Proxy-Vorrichtung auf die gemeinsame Dienstentität als eine erste Anwendungsentität gemäß der erzeugten Ressource abgebildet wird, und
die erste Anwendungsentität benachrichtigt wird, wenn das Ressourcenattribut modifiziert wird.

11. Verfahren nach Anspruch 10, wobei das Verfahren ferner aufweist:
Senden einer Abonnementanforderung an die gemeinsame Dienstentität und Empfangen einer Benachrichtigung von der gemeinsamen Dienstentität, wenn das Ressourcenattribut modifiziert wird.

12. Verfahren nach Anspruch 11, das ferner Folgendes aufweist
Senden einer Anforderung zum Erzeugen einer Ressource für die proxied-Vorrichtung an die gemeinsame Dienstentität, um die proxied-Vorrichtung als eine Inhalte teilende Ressource, die in der ersten Anwendungsentität gekapselt ist, auf die gemeinsame Dienstentität abzubilden, oder um die proxied-Vorrichtung als eine zweite Anwendungsentität auf die gemeinsame Dienstentität abzubilden.

13. Verfahren nach Anspruch 12, wobei die Benachrichtigung eine Aufforderung enthält, die Proxy-Vorrichtung anzusteuern, die proxied-Vorrichtung zu betreiben, und das Ressourcenattribut mindestens eines von einem Vorrichtungserkennungsattribut und einem Vorrichtungssteuerungsattribut enthält, wobei Zustandsinformationen der proxied-Vorrichtung erhalten werden, wenn das Vorrichtungserkennungsattribut modifiziert wird, und die proxied-Vorrichtung gesteuert wird, wenn das Vorrichtungssteuerungsattribut modifiziert wird.

14. Verfahren nach Anspruch 12 oder 13, ferner aufweisend:
Erhalten einer Steueranweisung von der gemeinsamen Dienstentität, Erzeugen einer Betriebsanweisung zum Betreiben der proxied-Vorrichtung gemäß der Steueranweisung, um die proxied-Vorrichtung zu steuern.

15. Proxy-Vorrichtung zum Betreiben einer proxied-Vorrichtung, aufweisend:
einen Sendeempfänger (2000), der so konfiguriert ist, dass er eine Anforderung zum Erzeugen einer Ressource an eine gemeinsame Dienstentität sendet, die mit der Proxy-Vorrichtung kommuniziert, wobei die Ressource ein Ressourcenattribut enthält, das zum Betreiben der Proxy-Vorrichtung über die Proxy-Vorrichtung erforderlich ist; und
einen Prozessor (2010), der konfiguriert ist, eine Betriebsanweisung zum Betreiben der Proxy-Vorrichtung zu erzeugen, wenn das Ressourcenattribut modifiziert wird;
**dadurch gekennzeichnet, dass**
die Proxy-Vorrichtung auf die gemeinsame Dienstentität als eine erste Anwendungsentität gemäß der erzeugten Ressource abgebildet wird, und
die erste Anwendungsentität benachrichtigt wird, wenn das Ressourcenattribut modifiziert wird.

## Revendications

1. Procédé de fonctionnement d'un dispositif mandaté, comprenant :
la création d'une ressource pour un dispositif mandataire qui est connecté au dispositif mandaté (S1200), la ressource incluant un attribut de ressource qui est requis pour faire fonctionner le dispositif mandaté via le dispositif mandataire ; et
le déclenchement du dispositif mandataire pour faire fonctionner le dispositif mandaté lorsque l'attribut de ressource est modifié (S 1210) ;
**caractérisé en ce que** :
le dispositif mandataire est cartographié en tant que première entité d'application par rapport à une entité de service commune conformément à la ressource créée (S1500) ; et
la première entité d'application reçoit une notification lorsque l'attribut de ressource est modifié (S 1510).

2. Procédé selon la revendication 1, comprenant en outre :
la réception d'une requête pour faire fonctionner le dispositif mandaté (S1300 ; S1400) et la modification de l'attribut de ressource conformément à la requête ; et
de préférence, dans lequel le dispositif mandaté est un dispositif de terminal de l'Internet des objets, IOT.

3. Procédé selon la revendication 1, comprenant en outre :
la modification de l'attribut de ressource en fonction d'une condition prédéfinie.

4. Procédé selon l'une quelconque des revendications 1 à 3, comprenant en outre :
la réception d'une requête d'abonnement qui est envoyée depuis le dispositif mandataire avant que l'attribut de ressource ne soit modifié.

5. Procédé selon l'une quelconque des revendications 2 à 4, dans lequel l'attribut de ressource inclut un attribut de découverte de dispositif ; et lorsque l'attribut de découverte de dispositif est modifié, le dispositif mandataire est déclenché pour obtenir une information d'état du dispositif mandaté (S1310).

6. Procédé selon l'une quelconque des revendications 2 à 4, dans lequel l'attribut de ressource inclut un attribut de commande de dispositif ; et lorsque l'attribut de commande de dispositif est modifié, le dispositif mandataire est déclenché pour commander le dispositif mandaté (S1410).

7. Procédé selon la revendication 1, comprenant en outre :
la création d'une ressource pour le dispositif mandaté, et la cartographie du dispositif mandaté en tant que ressource de partage de contenu qui est encapsulée dans la première entité d'application par rapport à l'entité de service commune ou la cartographie du dispositif mandaté en tant que seconde entité d'application par rapport à l'entité de service commune.

8. Procédé selon la revendication 6, comprenant en outre :
la réception d'une instruction de commande qui est associée à une requête pour modifier l'attribut de commande de dispositif (S1600), et le déclenchement du dispositif mandataire pour commander le dispositif mandaté conformément à l'instruction de commande (S1610).

9. Système pour faire fonctionner un dispositif mandaté, comprenant un dispositif de commande, un dispositif mandataire et le dispositif mandaté,
dans lequel le dispositif de commande comprend :
un processeur (1700) qui est configuré pour créer une ressource pour un dispositif mandataire qui est connecté au dispositif mandaté, la ressource incluant un attribut de ressource qui est requis pour faire fonctionner le dispositif mandaté via le dispositif mandataire ; et
un contrôleur (1710) qui est configuré pour déclencher le dispositif mandataire pour faire fonctionner le dispositif mandaté lorsque l'attribut de ressource est modifié ;
**caractérisé en ce que** :
le dispositif mandataire est cartographié en tant que première entité d'application par rapport à une entité de service commune conformément à la ressource créée (S1500) ; et
la première entité d'application reçoit une notification lorsque l'attribut de ressource est modifié (S 1510).

10. Procédé de fonctionnement d'un dispositif mandaté, comprenant :
l'envoi à une entité de service commune d'une requête pour créer une ressource pour un dispositif mandataire, la ressource incluant un attribut de ressource qui est requis pour faire fonctionner le dispositif mandaté via le dispositif mandataire (S1900) ; et
la génération d'une instruction de fonctionnement pour faire fonctionner le dispositif mandaté lorsque l'attribut de ressource est modifié (S1910) ;
**caractérisé en ce que** :
le dispositif mandataire est cartographié par rapport à l'entité de service commune en tant que première entité d'application conformément à la ressource créée ; et
la première entité d'application reçoit une notification lorsque l'attribut de ressource est modifié.

11. Procédé selon la revendication 10, dans lequel le procédé comprend en outre :
l'envoi d'une requête d'abonnement à l'entité de service commune, et la réception d'une notification en provenance de l'entité de service commune lorsque l'attribut de ressource est modifié.

12. Procédé selon la revendication 11, comprenant en outre :
l'envoi à l'entité de service commune d'une requête pour créer une ressource pour le dispositif mandaté, de manière à cartographier le dispositif mandaté en tant que ressource de partage de contenu qui est encapsulée dans la première entité d'application par rapport à l'entité de service commune ou de manière à cartographier le dispositif mandaté en tant que seconde entité d'application par rapport à l'entité de service commune.

13. Procédé selon la revendication 12, dans lequel la notification inclut une requête pour déclencher le dispositif mandataire pour faire fonctionner le dispositif mandaté et l'attribut de ressource inclut au moins un attribut parmi un attribut de découverte de dispositif et un attribut de commande de dispositif, dans lequel une information d'état du dispositif mandaté est obtenue lorsque l'attribut de découverte de dispositif est modifié, et le dispositif mandaté est commandé lorsque l'attribut de commande de dispositif est modifié.

14. Procédé selon la revendication 12 ou 13, comprenant en outre :
l'obtention d'une instruction de commande en provenance de l'entité de service commune, et la génération d'une instruction de fonctionnement pour faire fonctionner le dispositif mandaté conformément à l'instruction de commande de manière à commander le dispositif mandaté.

15. Dispositif mandataire pour faire fonctionner un dispositif mandaté, comprenant :
un émetteur-récepteur (2000) qui est configuré pour envoyer une requête pour créer une ressource à une entité de service commune qui communique avec le dispositif mandataire, la ressource incluant un attribut de ressource qui est requis pour faire fonctionner le dispositif mandaté via le dispositif mandataire ; et
un processeur (2010) qui est configuré pour générer une instruction de fonctionnement pour faire fonctionner le dispositif mandaté lorsque l'attribut de ressource est modifié ;
**caractérisé en ce que** :
le dispositif mandataire est cartographié par rapport à l'entité de service commune en tant que première entité d'application conformément à la ressource créée ; et
la première entité d'application reçoit une notification lorsque l'attribut de ressource est modifié.
